(19) Europäisches Patentamt
European Patent Office
Office européen des brevets

(11) EP 2 174 712 B1

(12) FASCICULE DE BREVET EUROPEEN

(45) Date de publication et mention de la délivrance du brevet:
**28.03.2018 Bulletin 2018/13**

(21) Numéro de dépôt: **09172228.0**

(22) Date de dépôt: **05.10.2009**

(51) Int Cl.:
***B01J 23/85*** *(2006.01)* ***B01J 23/94*** *(2006.01)*
***B01J 31/02*** *(2006.01)* ***B01J 37/02*** *(2006.01)*
***B01J 38/12*** *(2006.01)* ***B01J 38/52*** *(2006.01)*
***B01J 38/62*** *(2006.01)* ***C10G 45/08*** *(2006.01)*

(54) **Procédé de régénération de catalyseurs de traitement d'hydrocarbures.**

Regenerierungsverfahren von Katalysatoren zur Aufbereitung von Kohlenwasserstoffen

Method for regenerating hydrocarbon processing catalysts.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.10.2008 FR 0856883**

(43) Date de publication de la demande:
**14.04.2010 Bulletin 2010/15**

(73) Titulaire: **EURECAT SA.**
**07800 La Voulte-sur-Rhône (FR)**

(72) Inventeurs:
- **Galliou, Pauline**
**07360 Dunières sur Eyrieux (FR)**
- **Nagy, Eric**
**07800 charmes (FR)**
- **Dufresne, Pierre**
**26000 Valence (FR)**

(74) Mandataire: **Casalonga, Axel**
**Casalonga & Partners**
**Bayerstrasse 73**
**80335 München (DE)**

(56) Documents cités:
**WO-A1-2005/035691**
**FR-A1- 2 578 447**
**US-A1- 2008 194 892**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 174 712 B1

## Description

La présente invention concerne un procédé pour régénérer des catalyseurs destinés au traitement d'hydrocarbures dans le domaine notamment du raffinage pétrolier et de la pétrochimie.

La présente demande concerne plus précisément un procédé destiné à régénérer des catalyseurs usés d'hydrotraitement et/ou d'hydroconversion d'hydrocarbures, afin de leur restituer un niveau d'activité satisfaisant, au moins approchant de celui d'un catalyseur neuf.

La présente invention concerne également les catalyseurs régénérés obtenus par ce procédé.

Les procédés de traitement des hydrocarbures effectués dans les raffineries et/ou les unités de pétrochimie incluent un certain nombre de traitements réalisés en présence d'hydrogène, et qui sont destinés à modifier la structure des molécules d'hydrocarbures et/ou à éliminer des coupes hydrocarbonées des composés indésirables tels que notamment les composés soufrés, azotés, aromatiques, métalliques. Peuvent être cités, à titre d'exemples non limitatifs, les procédés d'hydrocraquage, de réformage, d'hydrogénation, et les procédés dits d'hydrotraitement tels que les procédés d'hydrodésulfuration, d'hydrodéazotation, d'hydrodéaromatisation, d'hydrodémétallation.

Ces procédés font appel à des catalyseurs spécifiques, qui comprennent un support poreux à base d'un ou plusieurs oxydes inorganiques réfractaires, sur lequel sont déposés un ou plusieurs métaux catalytiquement actifs, comprenant au moins un métal du groupe VIII de la classification périodique des éléments, généralement associé à un ou plusieurs métaux du groupe VIB.

Au cours de leur utilisation, ces catalyseurs se désactivent progressivement, notamment du fait du dépôt à leur surface de coke, c'est-à-dire d'un mélange d'hydrocarbures lourds, de résidus de carbone, d'impuretés métalliques.

Dans un souci d'économie et de préservation de l'environnement, on cherche désormais de plus en plus à réutiliser ces catalyseurs après leur cycle d'utilisation.

Ont ainsi été mis au point des procédés dits de régénération, qui consistent à traiter les catalyseurs usés afin de restaurer leur activité à un niveau suffisant pour permettre leur réemploi.

La régénération des catalyseurs usés est traditionnellement effectuée par combustion du coke, en chauffant le catalyseur à une température élevée en présence d'un gaz contenant de l'oxygène. Elle peut être réalisée in situ (c'est-à-dire, directement dans l'unité, après arrêt de celle-ci), ou ex situ (c'est-à-dire après déchargement du catalyseur hors de l'unité).

Cependant, dès leur première régénération, ces catalyseurs présentent une activité parfois nettement inférieure à leur activité initiale à l'état neuf.

C'est pourquoi ont été développés récemment des procédés dits de réjuvénation, dans lesquels les catalyseurs régénérés sont imprégnés d'un additif organique, dans le but de ramener leur activité à un niveau le plus proche possible de celui d'un catalyseur neuf.

Ainsi, la demande de brevet WO 96/41848 décrit un procédé d'activation d'un catalyseur d'hydrotraitement comprenant un oxyde d'un métal du groupe VIII et un oxyde de métal du groupe VI déposés sur un support. Selon ce procédé, le catalyseur est mis au contact d'un additif, qui est un composé comprenant au moins 2 groupements hydroxyle et de 2 à 10 atomes de carbone, ou un (poly)éther d'un tel composé, puis le catalyseur est séché dans des conditions telles que au moins 50% de l'additif reste présent sur le catalyseur.

Ce procédé s'applique tant à un catalyseur neuf dont on souhaite augmenter l'activité, qu'à un catalyseur usé, qui a auparavant subit une étape de régénération. Les additifs préférés sont l'éthylène-glycol, le diéthylène-glycol et les polyéthylène-glycols.

La demande de brevet EP 0 882 503 décrit un procédé de régénération d'un catalyseur usé comprenant un support à base d'alumine gamma et d'alumine amorphe, imprégné d'un ou plusieurs métaux catalytiquement actifs, dans lequel :

(1) le catalyseur usé est traité pour enlever les dépôts carbonés ;
(2) le support ainsi traité est mouillé au moyen d'un agent chélatant dans un liquide de support;
(3) le support ainsi mouillé subit une phase de vieillissement ;
(4) le support est séché de manière à évaporer le liquide de support ;
(5) le support ainsi séché est calciné.

Les agents chélatants cités sont l'acide éthylènediaminetétraacétique (EDTA) et ses dérivés tels que par exemple le N-hydroxy-EDTA et le diammonium-EDTA, le tri(2-aminoéthyl) amine, le triéthylènetétraamine, l'acide diéthylènetriaminepentaacétique, l'acide cyclohexanediaminetétraacétique, l'acide tétraacétique N,N'-éthylèneglycol-bis-(beta-aminoéthyléther), et le tétraéthylènepentaamine.

La demande de brevet WO 01/02092 décrit un procédé pour régénérer et réjuvéner un catalyseur additivé usé, comprenant une étape de régénération du catalyseur par mise en contact avec un gaz oxygéné à une température maximale de 500°C, puis une étape de réjuvénation du catalyseur par mise contact de celui-ci avec un additif organique,

éventuellement suivie d'un séchage à une température telle que au moins 50% de l'additif reste présent sur le catalyseur.

La température de régénération est de préférence comprise entre 350 et 425°C. L'additif organique employé dans ce procédé peut être tout composé comprenant au moins un atome de carbone et un atome d'hydrogène.

La demande WO 2005/035691 divulgue un procédé pour activer un catalyseur d'hydrotraitement comprenant un oxyde de métal du groupe VIB et un oxyde de métal du groupe VIII, dans lequel le catalyseur est mis en contact avec un acide et un additif organique.

Par ailleurs, la demande FR 2 578 447 décrit un procédé de régénération de catalyseurs d'hydrotraitement de charges lourdes, contaminés par des métaux tels que le vanadium, le nickel, le fer. Ce procédé consiste à calciner le catalyseur en présence d'oxygène, puis à extraire les métaux au moyen d'une solution aqueuse de peroxyde d'hydrogène. Afin d'éviter que cette solution ne se décompose, et augmenter les taux d'extraction des métaux, la solution de peroxyde d'hydrogène contient également un acide organique.

Cependant, les méthodes décrites dans l'art antérieur présentent un certain nombre d'inconvénients.

Notamment, certains des additifs employés dans ces méthodes présentent une relative toxicité, ce qui rend leur emploi plus difficile, et ce d'autant plus à l'échelle industrielle.

La Demanderesse a également constaté que certains de ces additifs, une fois déposés sur le catalyseur, conduisent ensuite à un dégagement de monoxyde de carbone (CO), qui est un gaz particulièrement toxique, et polluant.

Le but de la présente invention est de proposer une méthode améliorée pour régénérer les catalyseurs usés à base de métaux des groupes VIII et VIB, qui permette de remédier aux inconvénients des méthodes de l'art antérieur tout en permettant d'obtenir un niveau d'activité au moins équivalent, voire supérieur.

La Demanderesse a constaté que cet objectif était atteint au moyen d'un procédé mettant en oeuvre la combinaison de deux étapes, une première étape de combustion du coke dans des conditions de température contrôlées, suivie d'une deuxième étape de dépôt d'un additif particulier à la surface du catalyseur.

Ainsi, la présente invention a pour objet un procédé de régénération d'un catalyseur contenant au moins un métal du groupe VIII et au moins un métal du groupe VIB déposés sur un support d'oxyde réfractaire, comprenant :

- au moins une première étape de traitement thermique du catalyseur, en présence d'oxygène et à une température allant de 350°C à 550°C ;
- une seconde étape de dépôt, à la surface du catalyseur, d'un ou plusieurs additif(s) de formule (I) :

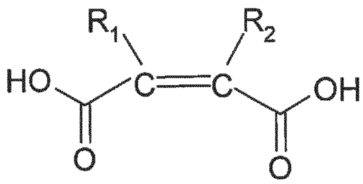

(I)

dans laquelle les groupements $R_1$ et $R_2$, identiques ou différents, désignent un atome d'hydrogène ou un radical hydrocarboné linéaire ou ramifié, saturé ou insaturé, comprenant de 1 à 4 atomes de carbone et pouvant être substitué par un ou plusieurs groupements -OH, -OR, -SH, -SR, $-NH_2$, -NHR, -NRR', avec R et R' désignant des groupements alkyle comprenant de 1 à 4 atomes de carbone,

la quantité totale d'additif(s) de formule (I) déposé(s) à la surface du catalyseur à l'issue de ladite seconde étape, exprimée comme étant le ratio de la quantité molaire d'additif(s) de formule (I) sur la quantité molaire totale de métaux des groupes VIII et VIB, étant d'au moins 0.01 moles d'additif(s) par mole de métaux des groupes VIII et VIB, la seconde étape ne comprenant pas de dépôt, en plus du (des) additif(s) de formule (I), d'un ou plusieurs additifs organiques additionnels.

Le procédé selon l'invention permet de restituer au catalyseur un excellent niveau d'activité, supérieur à celui constaté avec certains procédés de l'art antérieur.

En outre, les additifs de formule (I) sont généralement faciles à mettre en oeuvre, et peu toxiques.

Enfin, la Demanderesse a constaté, et ce de manière surprenante, que le procédé selon l'invention permet de réduire sensiblement, voire d'éliminer, les dégagements de monoxyde de carbone constatés avec les procédés de l'art antérieur mettant en oeuvre des additifs organiques.

La Figure 1 annexée à la présente demande présente les émissions de monoxyde de carbone (en ppm) au cours du temps (en jours) de catalyseurs régénérés au moyen du procédé selon la présente invention, par rapport au même catalyseur régénéré selon un procédé de l'état de la technique.

Le procédé selon la présente invention comporte une première étape de traitement thermique du catalyseur, qui consiste en un chauffage de celui-ci à une température allant de 350°C à 550°C, en présence d'oxygène. Cette

étape a pour but d'éliminer le coke présent à la surface du catalyseur, par combustion de celui-ci.

Le contrôle strict de la température au sein du catalyseur est essentiel lors de cette étape. La température doit en effet être suffisamment élevée pour permettre une combustion aussi complète que possible du coke. Cependant, elle ne doit pas dépasser 550°C, et ce même localement, car cela aurait pour effet d'endommager le catalyseur par exemple en dégradant la porosité de celui-ci.

De préférence, la première étape de traitement thermique est effectuée à une température inférieure ou égale à 530°C, et de manière préférée inférieure ou égale à 520°C.

Selon un mode de réalisation particulier de l'invention, la première étape de traitement thermique est effectuée, en totalité ou en partie, à une température supérieure à 500°C, et inférieure ou égale à 550°C.

Ce mode de réalisation particulier permet d'éliminer de manière plus rapide et plus complète le coke et autres impuretés. Cependant, ceci nécessite un contrôle précis de la température, de manière à ce que celle-ci ne dépasse pas, localement, 550°C.

La température au sein du catalyseur peut être contrôlée, de manière connue en soi, par exemple au moyen de thermocouples disposés de manière appropriée dans la masse du catalyseur.

La première étape est effectuée en présence d'oxygène, par exemple au moyen d'un flux de gaz contenant de l'oxygène. Ce gaz peut être constitué par exemple d'air, pur ou mélangé à de l'oxygène additionnel ou à un gaz inerte, de manière à augmenter ou diminuer la teneur de l'air en oxygène. Ce gaz peut également être constitué d'un mélange d'oxygène et de gaz inerte tel que l'azote, ou d'autres mélanges gazeux comprenant de l'oxygène.

La teneur en oxygène du gaz est de préférence contrôlée, de manière à mieux contrôler la température de combustion. Cette teneur peut être fixe, ou au contraire varier au cours du temps lors de la première étape.

Le débit de gaz est également contrôlé, de façon à contrôler la combustion.

La première étape peut comprendre plusieurs phases, effectuées à des températures différentes et/ou en présence de quantités variables d'oxygène.

La durée totale de cette première étape dépend généralement de la quantité de catalyseur à traiter, de la composition de celui-ci, de la quantité de coke présent à sa surface, et des conditions opératoires (température, teneur en oxygène). Cette durée est d'autant plus courte que la température est élevée. Elle est généralement comprise entre 0,1 et 20 heures, de préférence entre 0,2 et 10 heures.

Le procédé selon la présente invention comporte une seconde étape au cours de laquelle un ou plusieurs additif(s) de formule (I) est (sont) déposé(s) à la surface du catalyseur.

De manière préférée, dans la formule (I) les groupements $R_1$ et $R_2$, identiques ou différents, désignent un atome d'hydrogène ou un radical hydrocarboné linéaire ou ramifié, saturé ou insaturé, comprenant de 1 à 4 atomes de carbone et pouvant être substitué par un ou plusieurs groupements -OH, -OR, -SH, -SR, $-NH_2$, -NHR, -NRR', avec R et R' désignant des groupements alkyle comprenant 1 ou 2 atomes de carbone.

De manière encore plus préférée, au moins l'un des deux groupements $R_1$ et $R_2$ désigne un atome d'hydrogène.

Selon un mode de réalisation particulièrement préféré de l'invention, $R_1$ et $R_2$ désignent tous deux un atome d'hydrogène.

L'additif de formule (I) est déposé à la surface du catalyseur par mise en contact du catalyseur avec cet additif. L'on peut procéder de plusieurs manières, par exemple en mettant le catalyseur en contact avec l'additif pur (notamment sous forme liquide ou gazeuse), ou avec une composition contenant l'additif au sein d'un fluide porteur qui peut être liquide, gazeux ou supercritique. De préférence, l'additif de formule (I) est déposé en mettant le catalyseur au contact d'une solution ou d'une suspension de l'additif dans un liquide porteur.

Ainsi, de manière particulièrement préférée, on procède par imprégnation du catalyseur au moyen d'une solution ou d'une dispersion de l'additif dans un liquide aqueux et/ou organique approprié.

Selon un mode de réalisation particulièrement avantageux de l'invention, le ou les additif(s) de formule (I) est (sont) déposé(s) sur le catalyseur par imprégnation avec une ou plusieurs solution(s) aqueuse(s) du (de ces) additif(s).

De préférence, la (les) solution(s) aqueuse(s) employée(s) ne comprend (comprennent) pas de co-solvant organique.

L'on peut procéder par imprégnation à sec du catalyseur (c'est-à-dire au moyen d'une solution dont le volume est inférieur ou égal au volume poreux du catalyseur), par imprégnation du catalyseur en présence d'un excès de solution, ou par trempage du catalyseur dans un excès de solution.

Cette mise en contact du catalyseur avec l'additif peut être instantanée ou durer jusqu'à 20 heures. De préférence, cette mise en contact dure environ 2 heures, de préférence environ 1 heure. Elle peut être réalisée à une pression allant de la pression atmosphérique à 5 bars, de préférence à pression atmosphérique.

S'il reste du solvant, celui-ci est ensuite éliminé par exemple par chauffage de manière à le faire évaporer, ou par aspiration, ou par séchage au moyen d'un flux gazeux éventuellement en présence de chauffage. En tout état de cause, l'élimination du solvant résiduel le cas échéant doit être effectuée de manière à conserver l'intégralité, ou au moins une partie substantielle, de l'additif déposé à la surface du catalyseur, et éviter que celui-ci ne se décompose.

Il est également possible de procéder à une étape de maturation du catalyseur, avant ou après élimination de

l'excès de solvant, à température ambiante ou en présence d'un léger chauffage pouvant aller jusqu'à 100°C.

Cette maturation peut être réalisée pendant une durée allant de 0,1 à 100 heures, de préférence de 0,2 à 20 heures, de manière plus préférée de 1 à 10 heures.

D'une manière générale, la seconde étape doit être réalisée dans des conditions permettant le dépôt à la surface du catalyseur d'une quantité suffisante d'additif de formule (I), de manière à obtenir un niveau d'activité satisfaisant.

Selon l'invention, à l'issue de la seconde étape, la quantité totale d'additif(s) de formule (I) déposé(s) à la surface du catalyseur, exprimée comme étant le ratio de la quantité molaire d'additif(s) de formule (I) sur la quantité molaire totale de métaux des groupes VIII et VIB, est d'au moins 0,01 moles d'additif(s) par mole de métaux des groupes VIII et VIB. De préférence, cette quantité est comprise entre 0,01 et 10 moles d'additif(s) par mole de métaux des groupes VIII et VIB, plus préférentiellement entre 0,05 et 5 moles et de manière encore plus préférée entre 0,1 et 1,5 moles.

Le procédé de régénération selon l'invention peut, outre les deux étapes décrites ci-avant, comprendre en option une ou plusieurs étapes additionnelles, effectuées avant et/ou après lesdites première et seconde étapes, ou encore intercalées entre ces deux étapes.

Ainsi, le procédé selon l'invention peut avantageusement comprendre, avant ladite première étape, une étape d'élimination des hydrocarbures et impuretés libres que renferme le catalyseur.

Cette étape peut s'effectuer par lavage du catalyseur. Un tel lavage peut être effectué au moyen d'un solvant adéquat tel que par exemple le toluène, les xylènes, l'acétone, ou tout autre solvant approprié.

Cette étape peut également, de manière avantageuse, être effectuée par stripage au moyen d'un flux de gaz, par exemple de l'air, de la vapeur d'eau, du dioxyde de carbone, un gaz inerte tel que l'azote, à une température par exemple comprise entre 100 et 450°C.

Le procédé selon l'invention peut également comprendre, après ladite seconde étape, une étape de séchage du catalyseur, qui peut être effectuée à une température allant de 80°C à 350°C, de préférence de 100°C à 200°C, à l'air libre ou en présence d'un flux gazeux d'air, de gaz inerte tel que l'azote, ou de tout autre gaz approprié.

Le procédé selon l'invention peut également comprendre en option, après ladite seconde étape, une étape de calcination du catalyseur, qui peut être effectuée à une température allant de 300°C à 500°C, à l'air libre ou en présence d'un flux gazeux d'air, de gaz inerte tel que l'azote, ou de tout autre gaz approprié.

Lorsque le procédé selon l'invention comprend déjà une étape de séchage du catalyseur, l'étape de calcination (s'il y en a une) est alors effectuée après celle-ci.

Enfin, le procédé selon l'invention peut inclure une ou plusieurs étape(s) finale(s) d'activation du catalyseur, dont le but est d'activer les sites catalytiques métalliques par transformation des oxydes métalliques en sulfures métalliques, immédiatement avant l'emploi du catalyseur.

Cette activation se fait par sulfuration, c'est-à-dire mise en contact du catalyseur avec un ou plusieurs agents de sulfuration. Cette sulfuration peut être précédée ou accompagnée d'une activation en présence d'hydrogène, effectuée simultanément ou juste avant la sulfuration proprement dite.

Les agents de sulfuration sont des composés connus en soi, et sont par exemple choisis parmi le sulfure d'hydrogène, le soufre élémentaire, le $CS_2$, les composés organiques soufrés tels que les mercaptans, les sulfures, les disulfures, les polysulfures, les coupes d'hydrocarbures contenant naturellement des composés soufrés, et/ou enrichies en composés soufrés.

Le procédé selon la présente invention peut être réalisé in situ, c'est-à-dire directement au sein de l'unité dans laquelle le catalyseur est employé.

Selon un mode de réalisation préféré, il est réalisé ex situ, c'est-à-dire après déchargement du catalyseur hors de l'unité.

Le procédé selon l'invention peut également être réalisé en partie in situ, et en partie ex situ. Ainsi, selon un mode de réalisation avantageux, lesdites première et seconde étapes selon l'invention sont réalisées ex-situ, les étapes additionnelles optionnelles pouvant chacune être réalisées in situ, ou ex situ.

Par exemple, le procédé selon l'invention peut comprendre :

- une première phase de traitement ex-situ comprenant au moins : une étape optionnelle de stripage, puis la première étape de traitement thermique, puis la seconde étape de dépôt du (des) aditif(s) de formule (I), puis une étape optionnelle de séchage, puis une étape optionnelle de calcination, puis étape optionnelle de pré-activation (notamment une présulfuration);
- une seconde phase de traitement in situ, comprenant au moins une étape d'activation par sulfuration.

Le procédé selon la présente invention permet de régénérer tout catalyseur usé d'hydrotraitement et/ou d'hydroconversion d'hydrocarbures dans les domaines du raffinage et de la pétrochimie.

Il s'agit de catalyseurs contenant au moins un métal du groupe VIII de la classification périodique des éléments, tels que par exemple le cobalt, le nickel, le fer, le platine, le palladium, associé à au moins un métal du groupe VIB tels

que par exemple le molybdène, le tungstène, le chrome. La teneur en métal ou métaux du groupe VIII est généralement comprise entre 0,1 et 10% en poids par rapport au poids total du catalyseur, et la teneur en métal ou métaux du groupe VIB est généralement comprise entre 1 et 20% en poids par rapport au poids total du catalyseur.

Ces métaux sont déposés sur un support à base d'un ou plusieurs oxydes minéraux réfractaires tels que notamment les alumines, les silices, les silice-alumines, les zéolithes, les zircones, les oxydes de titane et de bore, et les mélanges de tels oxydes.

De préférence, le support des catalyseurs traités au moyen du procédé selon l'invention est un support non zéolithique choisi parmi les alumines, les silices, et les silice-alumines. Plus préférentiellement, le support non zéolithique contient au moins 30% en poids, et mieux encore au moins 50% en poids, d'alumine.

Le procédé selon l'invention est particulièrement approprié à la régénération de catalyseurs contenant les associations métalliques CoMo, NiMo, NiW, NiCoMo, déposées sur des supports à base d'alumine.

Les catalyseurs usés peuvent contenir, ou avoir contenu, à l'état neuf ou à l'issue d'un précédent recyclage, un ou plusieurs additifs tels que des additifs organiques, des composés halogénés, borés, phosphorés.

Les catalyseurs intervenant dans le procédé selon l'invention se présentent généralement sous forme de particules solides de petite taille telles que des billes, des particules plus ou moins cylindriques, des extrudés. Ils présentent une surface spécifique, mesurée par la méthode BET, généralement comprise entre 100 et 300 $m^2/g$, un volume poreux, déterminé par adsorption d'azote, allant de 0,25 à 1 ml/g, et un diamètre de pores moyen, déterminé par adsorption d'azote, allant de 7 à 20 nm.

La présente invention concerne également les catalyseurs recyclés obtenus au moyen du procédé décrit ci-avant. Ces catalyseurs présentent un niveau d'activité particulièrement satisfaisant, et présentent l'avantage supplémentaire de ne pas donner lieu à des dégagements de monoxyde de carbone, notamment lors leur stockage avant emploi.

Les exemples qui suivent sont donnés à titre purement illustratif de la présente invention.

EXEMPLES

Exemple Comparatif 1 :

Cet exemple a été réalisé à partir d'un catalyseur commercial usé, contenant 23,1% en poids de $MoO_3$, 4,2% en poids de CoO, 12,4% en poids de carbone et 14,5% en poids de soufre.

Une portion de ce catalyseur usé a été soumise à un traitement thermique à une température de 400°C sous air, pendant une durée de 2 heures, pour obtenir le catalyseur traité T1.

La procédure consiste à placer 100g (équivalent poids sec) de catalyseur dans 5 coupelles de verre, introduire celles-ci dans un four à moufle préchauffé à 300°C, rester 1 heure à cette température, porter le four à 400°C et rester 2 heures à cette température.

Une portion identique de ce même catalyseur usé a été soumise à un traitement thermique selon la même procédure, mais avec une température de 520°C pendant une durée de 2 heures pour le palier final, pour obtenir le catalyseur traité T2.

Les caractéristiques des catalyseurs T1 et T2 figurent dans le tableau ci-dessous :

| | T1 | T2 |
|---|---|---|
| Teneur en carbone (% en poids) | 1,3 | 0,2 |
| Teneur en soufre (% en poids) | 0,4 | 0,2 |
| Surface spécifique ($m^2/g$) | 175 | 181 |

100 g du catalyseur T1 ont été imprégnés à saturation du volume poreux par une solution constituée de 10 g de polyéthylène glycol 200 (PEG-200) et de 33 g d'eau déminéralisée.

Après imprégnation, l'échantillon a été soumis à une étape de maturation pendant 8 heures à une température de 70°C, puis séché sous azote dans une étuve à 140°C, pour obtenir le catalyseur régénéré comparatif A1.

100 g du catalyseur T1 ont été imprégnés à saturation du volume poreux par une solution constituée de 10 g d'acide maléique et de 35 g d'eau déminéralisée.

Après imprégnation, l'échantillon a été soumis à une étape de maturation pendant 8 heures à une température de 70°C, puis séché sous azote dans une étuve à 140°C, pour obtenir le catalyseur régénéré selon l'invention A2.

100 g du catalyseur T2 ont été imprégnés à saturation du volume poreux par une solution constituée de 10 g d'acide maléique et de 35 g d'eau déminéralisée.

Après imprégnation, l'échantillon a été soumis à une étape de maturation pendant 8 heures à une température

de 70°C, puis séché sous azote dans une étuve à 140°C, pour obtenir le catalyseur régénéré selon l'invention A3.

Les activités en hydrodésulfuration d'hydrocarbures des catalyseurs T1, T2, et A1 à A3 ont alors été comparées, en suivant le protocole décrit ci-après.

La charge utilisée est un gazole "straight run", qui présente les caractéristiques suivantes :

| | |
|---|---|
| Teneur en soufre (ppm en poids) | 12200 |
| Teneur en azote (ppm en poids) | 94 |
| Densité (g/mL) | 0,837 |

Pour chaque échantillon, le volume de catalyseur employé pour le test était de 10mL.

Avant le test d'hydrodésulfuration proprement dit, chaque échantillon de catalyseur a été activé par sulfuration après une période de mouillage de 3 heures à température ambiante par le gazole, additivé de 2,5% en poids de soufre par du disulfure de diméthyle (DMDS). La procédure de sulfuration a été effectuée avec une vitesse volumique horaire (VVH) de $3h^{-1}$, avec un rapport $H_2$/gazole additivé de 200 (NL/h)/(L/h) et une pression totale de 3MPa (30bars). Une première rampe de température de la température ambiante à 250°C a été effectuée avec une rampe de 30°C/h, suivie d'un palier de 8h à 250°C. Une deuxième rampe de température de 250°C à 320°C a ensuite été réalisée avec une rampe de 20°C/h, suivie d'un palier de 5h à 320°C.

La charge de test a alors été injectée pour démarrer le test proprement dit. Les conditions de test étaient les suivantes : pression de 3 MPa, rapport $H_2$/gazole de 300, VVH = $2h^{-1}$, température de 340 à 350°C.

La teneur en soufre de la charge a été mesurée en sortie d'unité au moyen d'un analyseur par fluorescence UV. Les constantes apparentes de la réaction de désulfuration ont été calculées selon la formule E1 ci-après :

$$K_v = \left(\frac{1}{\alpha - 1}\right)\left(\frac{1}{S^{\alpha-1}} - \frac{1}{S_0^{\alpha-1}}\right) * VVH \qquad \text{(E1)}$$

avec

- $K_v$ = constante apparente de réaction
- $\alpha$ = ordre de la réaction (considéré égal à 1,2)
- S = teneur en soufre des effluents
- $S_0$ = teneur en soufre de la charge
- VVH = vitesse volumique horaire de la charge liquide

Les performances de chaque échantillon ont été évaluées par rapport à celle d'un catalyseur de référence. Pour cela, l'activité relative volumique (notée RVA pour "Relative Volume Activity") a été calculée selon la formule E2 suivante :

$$RVA = \frac{Kv(\acute{e}chantillon)}{Kv(r\acute{e}f\acute{e}rence)} \times 100 \qquad \text{(E2)}$$

Comme référence, a été attribuée la valeur $K_v$ de 100 au catalyseur traité T2.

Les résultats obtenus sont rassemblés dans le tableau ci-dessous:

| Catalyseur | Température du traitement thermique | Additif | RVA (%) |
|---|---|---|---|
| Catalyseur traité T1 | 400°C | Non | 106 |
| Catalyseur traité T2 | 520°C | Non | 100 |
| Catalyseur régénéré comparatif A1 | 400°C | PEG-200 | 129 |
| Catalyseur régénéré selon l'invention A2 | 400°C | Acide maléique | 135 |
| Catalyseur régénéré selon l'invention A3 | 520°C | Acide maléique | 147 |

Les résultats figurant dans le tableau ci-dessus montrent que les catalyseurs A2 et A3 régénérés au moyen du procédé selon l'invention sont plus actifs que les catalyseurs traités T1 et T2, et que le catalyseur régénéré comparatif A1.

Exemple comparatif 2 :

Dans cet exemple, ont été comparées les stabilités au stockage des catalyseurs régénérés A1, A2 et A3 préparés selon l'exemple 1 ci-avant.

Cette stabilité a été caractérisée en mesurant la quantité de monoxyde de carbone (CO) émise par chaque catalyseur au cours du temps. Ces émissions proviennent d'une décomposition partielle de l'additif imprégné à la surface du catalyseur. Ainsi, plus le catalyseur est stable, plus les émissions de CO sont faibles.

Pour suivre l'évolution du CO, un échantillon de chacun des trois catalyseurs a été placé dans une étuve à 35°C, et la teneur en CO dans le flacon contenant chaque échantillon a été contrôlée à intervalles réguliers.

Les résultats obtenus sont présentés dans la Figure 1 jointe en annexe, dans laquelle les émissions de CO (en ppm) sont présentées au cours du temps (en jours).

Ces résultats montrent que le catalyseur régénéré comparatif A1 n'est pas stable, et donne lieu à d'importants dégagements de monoxyde de carbone au cours du temps.

A l'inverse, les catalyseurs A2 et A3 régénérés au moyen du procédé selon la présente invention sont parfaitement stables au cours du temps; aucun dégagement de monoxyde de carbone n'a été constaté.

**Revendications**

1. Procédé de régénération d'un catalyseur contenant au moins un métal du groupe VIII et au moins un métal du groupe VIB déposés sur un support d'oxyde réfractaire, comprenant :

   - au moins une première étape de traitement thermique du catalyseur, en présence d'oxygène et à une température allant de 350°C à 550°C ;
   - une seconde étape de dépôt, à la surface du catalyseur, d'un ou plusieurs additif(s) de formule (I) :

   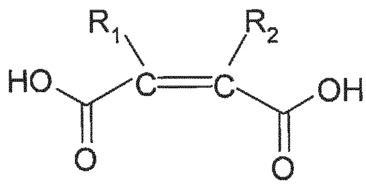

   (I)

   dans laquelle les groupements $R_1$ et $R_2$, identiques ou différents, désignent un atome d'hydrogène ou un radical hydrocarboné linéaire ou ramifié, saturé ou insaturé, comprenant de 1 à 4 atomes de carbone et pouvant être substitué par un ou plusieurs groupements -OH, -OR, -SH, -SR, $-NH_2$, -NHR, -NRR', avec R et R' désignant des groupements alkyle comprenant de 1 à 4 atomes de carbone,
   la quantité totale d'additif(s) de formule (I) déposé(s) à la surface du catalyseur à l'issue de ladite seconde étape, exprimée comme étant le ratio de la quantité molaire d'additif(s) de formule (I) sur la quantité molaire totale de métaux des groupes VIII et VIB, étant d'au moins 0,01 moles d'additif(s) par mole de métaux des groupes VIII et VIB,
   la seconde étape ne comprenant pas de dépôt, en plus du (des) additif(s) de formule (I), d'un ou plusieurs additifs organiques additionnels.

2. Procédé selon la revendication précédente, **caractérisé en ce que** ladite première étape est réalisée à une température inférieure ou égale à 530°C.

3. Procédé selon la revendication 1, **caractérisé en ce que** ladite première étape est effectuée, en totalité ou en partie, à une température supérieure à 500°C, et inférieure ou égale à 550°C.

4. Procédé selon la revendication 1, **caractérisé en ce que** au moins l'un des deux groupements $R_1$ et $R_2$ désigne un atome d'hydrogène, et de préférence $R_1$ et $R_2$ désignent tous deux un atome d'hydrogène.

5. Procédé selon l'une quelconque des revendications précédentes, **caractérisé en ce que** le ou les additif(s) de formule (I) est (sont) déposé(s) sur le catalyseur par imprégnation avec une ou plusieurs solution(s) aqueuse du (de ces) additif(s).

6. Procédé selon l'une quelconque des revendications précédentes, **caractérisé en ce que**, à l'issue de ladite seconde étape, la quantité totale d'additif(s) de formule (I) déposé(s) à la surface du catalyseur est comprise entre 0,01 et 10 moles d'additif(s) par mole de métaux des groupes VIII et VIB.

7. Procédé selon l'une quelconque des revendications précédentes, **caractérisé en ce qu'**il comprend une ou plusieurs étapes additionnelles, effectuées avant et/ou après lesdites première et seconde étapes, ou encore intercalées entre ces deux étapes.

8. Procédé selon la revendication précédente, caractérisé en qu'il comprend, avant ladite première étape, une étape d'élimination des hydrocarbures et impuretés libres, par lavage au solvant du catalyseur, ou par stripage au moyen d'un flux de gaz.

9. Procédé selon l'une quelconque des revendications 7 et 8, **caractérisé en ce qu'**il comprend, après ladite seconde étape, une étape de séchage du catalyseur, effectuée à une température allant de 80°C à 350°C, à l'air libre ou en présence d'un flux gazeux d'air, de gaz inerte tel que l'azote, ou de tout autre gaz approprié.

10. Procédé selon l'une quelconque des revendications 7 à 9, **caractérisé en ce qu'**il comprend une ou plusieurs étape(s) finale(s) d'activation du catalyseur par sulfuration, c'est-à-dire mise en contact du catalyseur avec un ou plusieurs agents de sulfuration.

11. Procédé selon l'une quelconque des revendications précédentes, **caractérisé en ce qu'**il est réalisé ex situ, c'est-à-dire après déchargement du catalyseur hors de l'unité.

12. Procédé selon l'une quelconque des revendications 1 à 10, **caractérisé en ce qu'**il est réalisé en partie in situ, et en partie ex situ.

13. Catalyseur régénéré obtenu au moyen du procédé selon l'une quelconque des revendications 1 à 12.

**Patentansprüche**

1. Verfahren zur Regeneration eines Katalysators, der mindestens ein Metall der Gruppe VIII und mindestens ein Metall der Gruppe VIB, die auf einem Träger aus refraktärem Oxid abgeschieden sind, enthält, umfassend:

   - mindestens einen ersten Schritt der thermischen Behandlung des Katalysators in Gegenwart von Sauerstoff und bei einer Temperatur im Bereich von 350 °C bis 550 °C;
   - einen zweiten Schritt der Abscheidung eines oder mehrerer Additive der Formel (I):

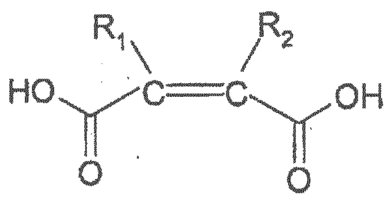

(I)

   auf der Oberfläche des Katalysators, wobei die Gruppen $R_1$ und $R_2$ gleich oder verschieden sind und für ein Wasserstoffatom oder einen gesättigten oder ungesättigten, linearen oder verzweigten Kohlenwasserstoffrest mit 1 bis 4 Kohlenstoffatomen, der durch ein oder mehrere -OH-, -OR-, -SH-, -SR-, $-NH_2-$, -NHR- oder -NRR'-Gruppen substituiert sein kann, stehen, wobei R und R' für Alkylgruppen mit 1 bis 4 Kohlenstoffatomen stehen, wobei die Gesamtmenge an Additiv(en) der Formel (I), das bzw. die am Ende des zweiten Schritts auf der Oberfläche des Katalysators abgeschieden ist bzw. sind, ausgedrückt als das Verhältnis der molaren Menge von Additiv(en) der Formel (I) zur gesamten molaren Menge von Metallen der Gruppen VIII und VIB, mindestens 0,01 mol Additiv(e) pro Mol Metalle der Gruppen VIII und VIB beträgt,

wobei der zweite Schritt nicht die Abscheidung eines oder mehrerer zusätzlicher organischer Additive zusätzlich zu dem Additiv bzw. den Additiven der Formel (I) umfasst.

2. Verfahren nach dem vorhergehenden Anspruch, **dadurch gekennzeichnet, dass** der erste Schritt bei einer Temperatur kleiner oder gleich 530 °C durchgeführt wird.

3. Verfahren nach Anspruch 1, **dadurch gekennzeichnet, dass** der erste Schritt vollständig oder teilweise bei einer Temperatur von mehr als 500 °C und kleiner oder gleich 550 °C durchgeführt wird.

4. Verfahren nach Anspruch 1, **dadurch gekennzeichnet, dass** mindestens eine der beiden Gruppen $R_1$ und $R_2$ für ein Wasserstoffatom steht und vorzugsweise $R_1$ und $R_2$ beide für ein Wasserstoffatom stehen.

5. Verfahren nach einem der vorhergehenden Ansprüche, **dadurch gekennzeichnet, dass** das Additiv bzw. die Additive der Formel (I) durch Imprägnieren mit einer oder mehreren wässrigen Lösungen des Additivs bzw. der Additive abgeschieden wird bzw. werden.

6. Verfahren nach einem der vorhergehenden Ansprüche, **dadurch gekennzeichnet, dass** am Ende des zweiten Schritts die Gesamtmenge von Additiv(en) der Formel (I), das bzw. die auf der Oberfläche des Katalysators abgeschieden ist bzw. sind, zwischen 0,01 und 10 mol Additiv(en) pro Mol Metalle der Gruppen VIII und VIB liegt.

7. Verfahren nach einem der vorhergehenden Ansprüche, **dadurch gekennzeichnet, dass** es einen oder mehrere zusätzliche Schritte umfasst, die vor und/oder nach dem ersten und zweiten Schritt oder auch dazwischen durchgeführt werden.

8. Verfahren nach dem vorhergehenden Anspruch, **dadurch gekennzeichnet, dass** es vor dem ersten Schritt einen Schritt der Entfernung von freien Verunreinigungen und Kohlenwasserstoffen durch Waschen des Katalysators mit Lösungsmittel oder durch Strippen mit einem Gasstrom umfasst.

9. Verfahren nach einem der Ansprüche 7 und 8, **dadurch gekennzeichnet, dass** es nach dem zweiten Schritt einen Schritt der Trocknung des Katalysators umfasst, der bei einer Temperatur im Bereich von 80 °C bis 350 °C an der Luft oder in Gegenwart eines Gasstroms von Luft, Inertgas wie Stickstoff oder einem anderen geeigneten Gas durchgeführt wird.

10. Verfahren nach einem der Ansprüche 7 bis 9, **dadurch gekennzeichnet, dass** es einen oder mehrere abschließende Schritte der Aktivierung des Katalysators durch Sulfurierung, d. h. Inkontaktbringen des Katalysators mit einem oder mehreren Sulfurierungsmitteln, umfasst.

11. Verfahren nach einem der vorhergehenden Ansprüche, **dadurch gekennzeichnet, dass** es teilweise ex situ, d. h. nach dem Austragen des Katalysators aus der Einheit, durchgeführt wird.

12. Verfahren nach einem der Ansprüche 1 bis 10, **dadurch gekennzeichnet, dass** es teilweise in situ und teilweise ex situ durchgeführt wird.

13. Regenerierter Katalysator, erhalten mit dem Verfahren nach einem der Ansprüche 1 bis 12.

**Claims**

1. Process for the regeneration of a catalyst comprising at least one metal from Group VIII and at least one metal from Group VIB which are deposited on a refractory oxide support, comprising:

- at least one first step of heat treatment of the catalyst in the presence of oxygen and at a temperature ranging from 350°C to 550°C;
- one second step of deposition, at the surface of the catalyst, of one or more additive(s) of formula (I):

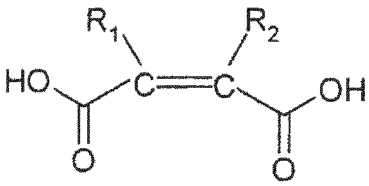

(I)

in which the $R_1$ and $R_2$ groups, which are identical or different, denote a hydrogen atom or a saturated or unsaturated, linear or branched hydrocarbon radical which comprises from 1 to 4 carbon atoms and which can be substituted by one or more -OH, -OR, -SH, -SR, $-NH_2$, -NHR or -NRR' groups, with R and R' denoting alkyl groups comprising from 1 to 4 carbon atoms,
the total amount of additive(s) of formula (I) deposited at the surface of the catalyst at the end of the said second step, expressed as the ratio of the molar amount of additive(s) of formula (I) to the total molar amount of metals from Groups VIII and VIB, being at least 0.01 mol of additive(s) per mole of metals from Groups VIII and VIB, wherein said second step does not comprise any deposition of one or more additional organic additives, in addition to the additive(s) of formula (I).

2. Process according to the preceding claim, **characterized in that** the said first step is carried out at a temperature of less than or equal to 530°C.

3. Process according to Claim 1, **characterized in that** the said first step is carried out, in all or in part, at a temperature of greater than 500°C and less than or equal to 550°C.

4. Process according to claim 1, **characterized in that** at least one of the two $R_1$ and $R_2$ groups denotes a hydrogen atom, and preferably $R_1$ and $R_2$ both denote a hydrogen atom.

5. Process according to any one of the preceding claims, **characterized in that** the additive or additives of formula (I) is (are) deposited on the catalyst by impregnation with one or more aqueous solution(s) of the (of these) additive(s).

6. Process according to any one of the preceding claims, **characterized in that**, at the end of the said second step, the total amount of additive(s) of formula (I) deposited at the surface of the catalyst is between 0.01 and 10 mol of additive(s) per mole of metals from Groups VIII and VIB.

7. Process according to any one of the preceding claims, **characterized in that** it comprises one or more additional steps carried out before and/or after the said first and second steps or also intercalated between these two steps.

8. Process according to the preceding claim, **characterized in that** it comprises, before the said first step, a step of removal of the free impurities and hydrocarbons by washing the catalyst with the solvent or by stripping using a stream of gas.

9. Process according to either one of Claims 7 and 8, **characterized in that** it comprises, after the said second step, a step of drying the catalyst, carried out at a temperature ranging from 80°C to 350°C, in the open air or in the presence of a gas stream of air, of an inert gas, such as nitrogen, or of any other appropriate gas.

10. Process according to any one of Claims 7 to 9, **characterized in that** it comprises one or more final step(s) of activation of the catalyst by sulphurization, that is to say bringing the catalyst into contact with one or more sulphurizing agents.

11. Process according to any one of the preceding claims, **characterized in that** it is carried out ex situ, that is to say after discharging the catalyst from the unit.

12. Process according to any one of Claims 1 to 10, **characterized in that** it is carried out partly in situ and partly ex situ.

13. Regenerated catalyst obtained by means of the process according to any one of Claims 1 to 12.

FIG. 1

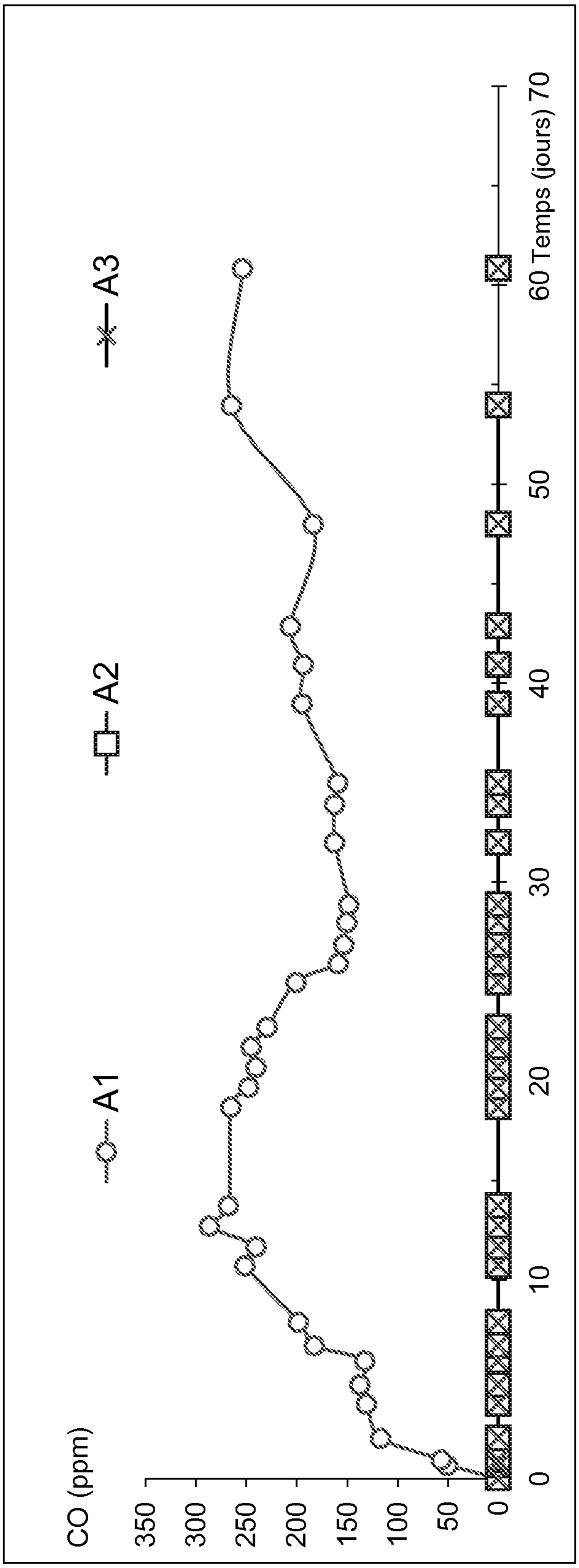
CO (ppm)
350
300
250
200
150
100
50
0
0
10
20
30
40
50
60 Temps (jours) 70
A1
A2
A3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9641848 A
- EP 0882503 A
- WO 0102092 A
- WO 2005035691 A
- FR 2578447